# FASCICULE DE BREVET EUROPEEN

(11) **EP 1 511 216 B1**
(45) Date de publication et mention de la délivrance du brevet: **03.10.2018**
(21) Numéro de dépôt: 04364056.4
(22) Date de dépôt: 27.08.2004
(51) Int. Cl.: H04L 12/18

(54) **Dispositif de transmission de messages par réseau à des postes d'utilisateurs**
Vorrichtung zur Übertragung von Nachrichten über ein Netzwerk an Nutzerendgeräte
Apparatus for transmitting messages over a network to subscriber terminals

(30) Priorité: 29.08.2003 FR 0310330
(43) Date de publication de la demande: 02.03.2005
(73) Titulaire: Orange, 75015 Paris (FR)
(72) Inventeur: Letournel, Jean-Pierre, 35510 Cesson-Sevigne (FR); Paris, Jeannine, 80500 Montdidier (FR); Giron, Philippe, 75020 Paris (FR); Gimeno, Vincent, 38570 Tencin (FR)

(56) Documents cités:
- EP-A- 1 128 591
- WO-A-02/35782
- US-A1- 2002 133 615
- US-A1- 2002 159 575
- US-B1- 6 349 340
- HIGGINS L ET AL: "Tunneling multicast traffic through non-multicast-aware networks and encryption devices" MILCOM 2001. PROCEEDINGS. COMMUNICATIONS FOR NETWORK-CENTRIC OPERATIONS: CREATING THE INFORMATION FORCE. MCLEAN, VA, OCT. 28 - 30, 2001, IEEE MILITARY COMMUNICATIONS CONFERENCE, NEW YORK, NY: IEEE, US, vol. 1 OF 2, 28 octobre 2001 (2001-10-28), pages 296-300, XP010579024 ISBN: 0-7803-7225-5

## Description

L'invention concerne un dispositif de transmission de messages par un réseau à une pluralité de postes d'utilisateurs.

Un domaine d'application de l'invention concerne l'envoi de messages à un réseau local, par exemple du type intranet d'entreprise ou, plus largement, à un réseau global, passant par exemple par l'Internet.

Dans les dispositifs connus, l'émetteur du message précise dans celui-ci le ou les postes d'utilisateurs destinataires du message et l'information qu'il veut leur faire passer par ce message.

Ainsi, les destinataires du message sont en fait des adresses de messagerie, que l'émetteur écrit de toute pièce dans le message, parce qu'il les connaît, ou que l'émetteur du message puise dans un carnet d'adresses consultable depuis son poste émetteur.

Afin de ne pas avoir à recomposer l'adresse complète de postes d'utilisateurs destinataires à chaque envoi de message, ce qui est d'autant plus long et fastidieux que le nombre de destinataires est grand, on a prévu un carnet d'adresses individuelles et, à l'intérieur de ce carnet, des listes rassemblant plusieurs adresses.

L'une des listes les plus répandues est "tous", qui englobe l'ensemble des adresses des postes d'utilisateurs du carnet. Même si ces listes rendent des services à l'émetteur du message et lui évitent de devoir recomposer l'ensemble des adresses, il n'en est pas de même pour les postes d'utilisateurs qui reçoivent ce message.

En effet, l'utilisateur d'un poste ayant reçu un tel message n'est pas forcément réellement intéressé par l'information qu'il contient.

Si un grand nombre de messages est envoyé à tous les postes d'utilisateurs ou à des listes de ceux-ci, il y a de fortes chances pour que certains postes d'utilisateurs soient surchargés par un grand nombre de messages qu'ils doivent ouvrir eux-mêmes, les uns après les autres, pour connaître leur intérêt.

Ainsi un message urgent et important adressé à tous risque d'être "noyé" parmi d'autres moins importants sur certains postes d'utilisateurs les ayant reçus. Par conséquent, le danger est grand qu'un tel message à caractère urgent et important passe inaperçu contrairement à l'effet souhaité, ce qui a des conséquences particulièrement graves si le message concerne la sécurité informatique du dispositif ou une action de maintenance devant être effectuée par l'utilisateur sur son poste.
D'une manière générale, les postes des utilisateurs sont surchargés d'un grand nombre de messages reçus, ce qui les rend moins faciles à utiliser et prend beaucoup de place dans la mémoire des serveurs acheminant les messages jusqu'aux postes. Le document US 6 349 340 décrit un système dans lequel les messages reçus par un client sont filtrés en fonction d'un identifiant.
L'invention vise à pallier les inconvénients de l'état de la technique et à proposer un dispositif de transmission de messages qui tienne mieux compte des exigences des utilisateurs des postes.
A cet effet, un premier objet de l'invention est un dispositif de transmission de messages par un premier réseau à une pluralité de postes d'utilisateurs, caractérisé en ce qu'il comporte :
au moins un moyen de création d'identifiants de groupes de postes d'utilisateurs, et une base (BDD) de données dans laquelle sont enregistrés les identifiants (IG) de groupes créés par le moyen (G) de création,
au moins un moyen d'administration, apte à produire au moins un message d'un premier type comprenant une information et au moins un identifiant de groupe associé au message parmi les identifiants de groupes créés par le moyen de création,
au moins un moyen d'émission pour faire parvenir par le premier réseau ledit au moins un message produit à des premiers postes d'utilisateurs,
chaque premier poste d'utilisateur comportant un moyen de réception automatique de messages du réseau, un moyen de sélection par l'utilisateur d'au moins un groupe d'appartenance parmi les identifiants de groupes d'utilisateurs créés par le moyen de création,
et un moyen de filtrage des messages reçus par le moyen de réception pour :
   ne présenter à l'utilisateur que l'information des messages du premier type parmi ceux qui sont présents sur le moyen de réception et dont l'identifiant de groupe est égal à un des groupes d'appartenance présents sur le moyen de sélection, et
   ne pas présenter à l'utilisateur l'information des messages du premier type, qui sont présents sur le moyen de réception et qui ont un identifiant de groupe associé différent des groupes d'appartenance présents sur le moyen de sélection, des liaisons étant prévues entre les postes (C) d'utilisateurs et la base (BDD) des données, pour que chaque moyen (S) de sélection soit apte à interroger la base (BDD) des données et obtenir les identifiants (IG) de groupe qui y sont enregistrés, en vue de sélectionner ledit au moins un groupe (GA) d'appartenance.

Grâce à l'invention, l'utilisateur peut choisir sur son poste que lui soient présentées ou ne lui soient pas présentées les informations contenues dans des messages qui lui sont destinés.

Ainsi, le dispositif de transmission selon l'invention est tourné vers les destinataires des messages qui peuvent choisir ou non que leur poste les leur présente. Ainsi, un utilisateur pourra ignorer d'avance des messages qu'il n'a pas choisis, ces messages arrivant sur son poste et ne lui étant tout simplement pas présentés, de manière totalement transparente pour l'utilisateur.

Contrairement aux dispositifs connus, le dispositif de transmission suivant l'invention fait appel à un comportement proactif de l'utilisateur en lui permettant de choisir les groupes de postes d'utilisateurs destinataires de messages auxquels il souhaite appartenir. Ainsi, ce choix tient compte de l'intérêt et de l'affinité que l'utilisateur peut porter à tel ou tel sujet. Par conséquent, en choisissant les groupes d'appartenance de son poste, l'utilisateur peut s'abonner à certains groupes et pas à d'autres. Les groupes définis ci-dessus sont donc indépendants des utilisateurs et de l'adresse de leur poste.

Par ailleurs, le dispositif de transmission suivant l'invention assure qu'un message portant sur un sujet précis associé à un groupe sera bien transmis à l'ensemble des postes d'utilisateurs intéressés, qui auront sélectionné ce groupe d'appartenance. La facilité d'utilisation de la messagerie en est accrue pour l'émetteur comme pour le récepteur du message, l'émetteur n'ayant pas à écrire ou sélectionner les adresses individuelles des utilisateurs auxquels il veut faire parvenir son message mais ayant seulement à préciser le groupe auquel ce message est destiné.

Le dispositif de transmission suivant l'invention évite de devoir gérer des listes d'adresses de distribution de messages, car n'ayant pas à connaître quels sont les utilisateurs qui ont sélectionné tel ou tel identifiant de groupe pour y appartenir.

Par conséquent, du côté de l'émetteur du message, celui-ci n'a pas à gérer la composition de carnets d'adresses, gestion qui demandait des mises à jour régulières et fastidieuses des adresses.

Ainsi, l'invention permet de diffuser de manière plus ciblée les messages à des destinataires. Suivant d'autres caractéristiques non limitatives de l'invention,
- le premier réseau est un réseau à multidiffusion pour l'envoi des messages du moyen d'émission aux postes d'utilisateurs ;
- ledit moyen d'émission est maître et il est prévu au moins un deuxième moyen d'émission esclave, apte à faire parvenir par un deuxième réseau des messages reçus à des deuxièmes postes d'utilisateurs desservis par ce deuxième réseau, chaque deuxième poste d'utilisateur comportant un moyen de réception de messages du deuxième réseau, un moyen de sélection d'au moins un groupe d'appartenance parmi les identifiants de groupes d'utilisateurs créés par le moyen de création, et un moyen de filtrage des messages reçus par le moyen de réception pour:
   ne présenter à l'utilisateur que l'information des messages du premier type parmi ceux qui sont présents sur le moyen de réception et dont l'identifiant de groupe est égal à un des groupes d'appartenance présents sur le moyen de sélection, et
   ne pas présenter à l'utilisateur l'information des messages du premier type, qui sont présents sur le moyen de réception et qui ont un identifiant de groupe associé différent des groupes d'appartenance présents sur le moyen de sélection,
   et, en outre, un réseau intermédiaire reliant le moyen d'émission maître au deuxième moyen d'émission esclave pour lui faire parvenir les messages ;
- les premier et deuxième réseaux sont chacun des réseaux à multidiffusion pour l'envoi respectivement des messages des moyens d'émission maître et esclave aux premiers et deuxièmes postes d'utilisateurs associés ;
- le réseau intermédiaire est un réseau à diffusion individuelle ;
- il est prévu sur le moyen d'administration, associés à chaque identifiant de groupe, au moins un identifiant d'administrateur et un mot de passe d'administrateur, et un moyen de saisie de l'identifiant d'administrateur et du mot de passe d'administrateur associé, de telle sorte que la production des messages comprenant une information et ledit au moins un identifiant de groupe associé ne soit permise par le moyen d'administration que lorsque l'identifiant d'administrateur saisi sur le moyen de saisie et le mot de passe d'administrateur saisi sur le moyen de saisie correspondent à ceux associés audit au moins un identifiant de groupe associé à ce message ;
- le moyen d'administration comporte au moins un identifiant d'administrateur général et un mot de passe d'administrateur général associés à tous
   les identifiants de groupe, de telle sorte que la production des messages comprenant une information et l'un quelconque des identifiants de groupe associé ne soit permise par le moyen d'administration que lorsque l'identifiant d'administrateur saisi sur le moyen de saisie et le mot de passe d'administrateur saisi sur le moyen de saisie correspondent audit au moins un identifiant d'administrateur général et au mot de passe d'administrateur général ;
- il est prévu un moyen de gestion pour permettre à une autorité supérieure de modifier, créer ou supprimer les associations sur le moyen d'administration entre ledit au moins un identifiant d'administrateur, ledit mot de passe d'administrateur et ledit au moins un identifiant de groupe
- il est prévu un moyen de détection, apte à produire au moins un message prédéfini du deuxième type, comportant au moins un identifiant de groupe parmi ceux créés par le moyen de création, pour transmission par le moyen d'émission aux postes d'utilisateurs, des moyens de détection du message du deuxième type étant prévus sur au moins un poste d'utilisateur en aval de son moyen de filtrage, de telle sorte que le moyen de filtrage ne transmette auxdits moyens de détection du poste que les messages du deuxième type, dont l'identifiant de groupe est égal à un des groupes d'appartenance présents sur le moyen de sélection associé, la bonne réception par ces moyens de détection du poste du message du deuxième type transmis par ledit moyen de filtrage déclenchant le renvoi automatique d'un signal d'acquittement via le réseau et le moyen d'émission au moyen de détection, lequel comporte des moyens d'exploitation des signaux d'acquittement reçus ;
- le message du deuxième type ne comporte aucune information, de manière à ne déclencher aucune présentation d'information sur le poste d'utilisateur l'ayant reçu ;
- les messages du premier type et les moyens de réception des postes d'utilisateurs sont tels que les messages reçus par ceux-ci et transmis par le moyen de filtrage y sont automatiquement ouverts pour présentation à l'utilisateur de l'information qu'ils contiennent ;
- au moins un message du premier type est prédéfini et enregistré par le moyen d'administration pour permettre plusieurs envois espacés dans le temps de celui-ci à au moins un poste d'utilisateurs ;
- le moyen d'administration comporte un moyen de définition ou non pour chaque message prédéfini du premier type d'une période de répétition d'envoi à au moins un poste d'utilisateurs;
   - l'information contenue dans ledit au moins un message du premier type est l'une ou plusieurs des suivantes :
      une information sonore,
      une information visuelle,
      une information audiovisuelle,
      une téléconférence audiovisuelle,
      une téléconférence audiovisuelle interactive,
      une émission audiovisuelle en direct,
      une émission audiovisuelle préenregistrée en différé,
      une information de questionnaire de sondage,
      une information de questionnaire de vote,
      une information de questionnaire de jeu,
      une information d'alerte,
      une information relative à la maintenance du dispositif de transmission ;
- les postes d'utilisateurs comportent au moins une borne de présentation d'informations au public ;
- les moyens de sélection comportent une interface permettant à l'utilisateur du poste associé d'ajouter aux groupes d'appartenance ou de supprimer des groupes d'appartenance, les identifiants de groupes ;
- il est prévu au moins un identifiant de groupe obligatoire imposé comme groupe d'appartenance pour au moins un poste d'utilisateurs et ne pouvant pas être supprimé de celui-ci par son moyen de sélection ;
- le moyen d'administration est tel qu'il apte à produire ledit au moins un message du premier type comportant en plus une référence de diffusion identique pour chaque information contenue dans celui-ci, au moins un poste d'utilisateurs comportant en plus des moyens pour contrôler la référence de diffusion contenue dans ledit au moins un message du premier type et ne pas présenter l'information qu'il contient lorsque ledit message possède une référence de diffusion identique à celle d'un message présenté précédemment sur ledit poste d'utilisateurs. L'invention a également pour objet un procédé de transmission de messages suivant la revendication 9, un programme d'ordinateur selon la revendication 10, et un poste d'utilisateur selon la revendication 11.

L'invention sera mieux comprise à la lecture de la description qui va suivre, donnée uniquement à titre d'exemple non limitatif en référence aux dessins annexés, sur lesquels :
- la figure 1 est un synoptique modulaire du dispositif de transmission suivant l'invention, dans un premier mode de réalisation, et
- la figure 2 est un synoptique modulaire du dispositif de transmission suivant l'invention, dans un deuxième mode de réalisation.

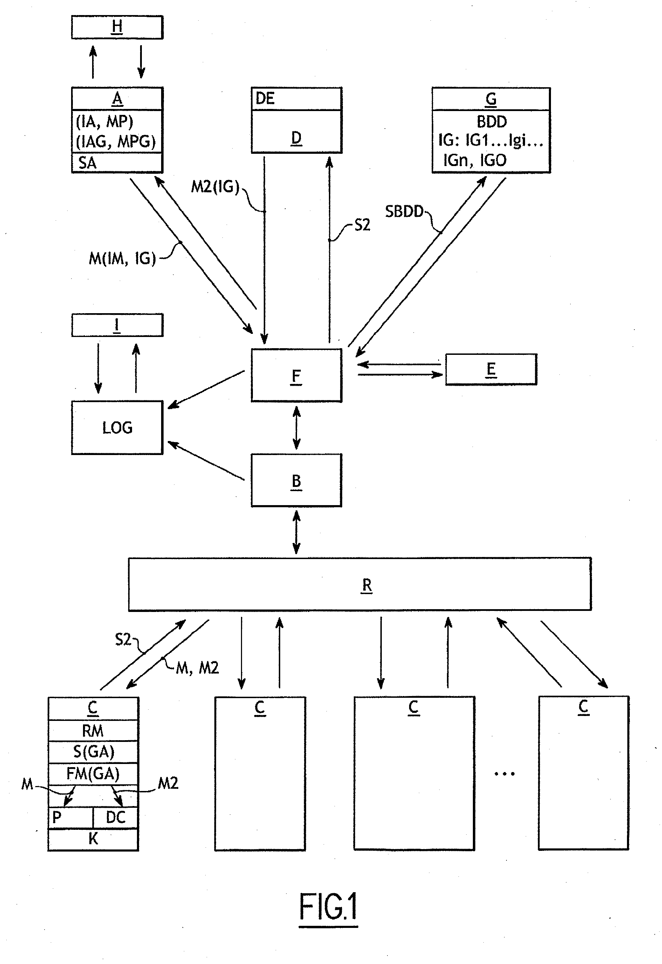

A la figure 1, le dispositif de transmission suivant l'invention comporte un moyen A d'administration, servant à générer des messages M à transmettre.

Chaque message M produit par le moyen A d'administration comprend, outre l'information IM proprement dite, destinée à être présentée à un utilisateur, un ou plusieurs identifiants IG de groupes d'utilisateurs qui sont associés aux messages.

Il est prévu plusieurs identifiants IG1, ..., IGi, ..., IGn de groupes de postes d'utilisateurs, qui sont créés par un moyen G de création, par exemple associé au moyen A d'administration. Pour produire un message M, le moyen A d'administration choisit l'identifiant IG de groupe associé à ce message parmi les identifiants IG1, ..., IGi, ..., IGn de groupes créés par le moyen G de création.

Lorsqu'un message M a été produit par le moyen A d'administration, ce message M est envoyé à un moyen F de transmission puis, de là, à un moyen B d'émission du message sur un réseau R. Dans le premier mode de réalisation de la figure 1, le moyen F de transmission transmet le message M qu'il a reçu du moyen A d'administration directement au moyen B d'émission. Plusieurs postes C d'utilisateurs distants sont associés au réseau R et au moyen B d'émission.

Chaque poste C d'utilisateur comporte un moyen RM de réception des messages lui parvenant par le réseau R. En outre, chaque poste C d'utilisateur comporte un moyen S pour sélectionner, parmi les identifiants IG1, ..., IGi, ..., IGn de groupes d'utilisateurs du moyen G de création, un ou plusieurs identifiants IG de groupes d'utilisateurs, les identifiants IG de groupes d'utilisateurs ainsi sélectionnés formant alors un ou plusieurs groupes GA d'appartenance du poste C d'utilisateur.

En outre, chaque poste C d'utilisateur comporte un moyen FM de filtrage des messages présents sur son moyen RM de réception. Le moyen FM de filtrage des messages reçus est commandé automatiquement pour ignorer, du point de vue de l'information IM qui est présentée sur le poste C à l'utilisateur, les messages M dont l'identifiant IG du groupe ne correspond pas à l'un des groupes GA d'appartenance présents sur son moyen S de sélection. Ainsi, seule l'information IM contenue dans les messages M qui sont reçus sur le poste C et qui sont associés à un identifiant IG du groupe correspondant à un groupe GA d'appartenance du poste C d'utilisateur, est présentée sur ce poste C à cet utilisateur, par tout moyen approprié P de présentation.

On suppose dans un premier exemple que le moyen A d'administration a choisi l'identifiant de groupe IGi dans son message M et que le moyen S du poste C a sélectionné comme groupe GA d'appartenance l'identifiant de groupe GA = IGi. Dans ce cas, ce message M reçu sur le moyen RM du poste C sera transmis par le moyen FM de filtrage pour être présenté à l'utilisateur sur le poste C.

On suppose dans un deuxième exemple que le moyen A d'administration a choisi l'identifiant de groupe IGi dans son message M et que le moyen S du poste C a sélectionné comme groupe GA d'appartenance l'identifiant de groupe GA = IGn. Dans ce cas, ce message M reçu sur le moyen RM du poste C sera retenu par le moyen FM de filtrage pour ne pas être présenté à l'utilisateur sur le poste C.

Bien entendu, dans un troisième exemple, le moyen S du poste C peut avoir sélectionner plusieurs identifiants de groupes comme IGi et IGn, ce qui ramène au premier exemple, ou comme IG1 et IGn, ce qui ramène au deuxième exemple.

Par ailleurs, la transmission du message M du moyen F de transmission au moyen B d'émission, ainsi que l'envoi par le moyen B d'émission du message M au réseau R sont par exemple enregistrés dans une base de données LOG associée à ceux-ci.

Le réseau R est par exemple un réseau à multidiffusion (en anglais : "multicast") pour envoyer les message M du moyen F d'émission aux postes C d'utilisateurs associés.

L'utilisation d'un réseau à multidiffusion permet de se dispenser de liaisons point à point entre le moyen B d'émission et les postes C d'utilisateurs qui multiplieraient d'autant le nombre de liaisons entre ceux-ci. Le réseau R à multidiffusion permet de définir une adresse de multidiffusion vers laquelle émet le moyen B d'émission (adresse « multicast »), ce qui permet de n'établir qu'une seule liaison entre le moyen B d'émission et le réseau R pour l'envoi du message M aux postes C. Chaque message M est dupliqué aux noeuds du réseau R en autant de nombre de fois que ces noeuds ont d'embranchements reliés aux postes C, pour l'envoi du même message M dans chacun de ces embranchements vers les postes C.

Le réseau R à multidiffusion permet ainsi d'économiser en bande passante. Ainsi, le réseau à multidiffusion permet de diffuser un seul flux vers un nombre illimité de destinataires C. Les paquets destinés aux postes C sont envoyés par le moyen B d'émission vers un ou plusieurs routeurs dédiés du réseau C, dont le rôle est la redirection et la réplication des paquets en fonction des besoins.

Le réseau R à multidiffusion peut être facilement mis en oeuvre sur les réseaux existants en activant une option correspondante sur les éléments constitutifs du réseau R (routeur et/ou autres). Le protocole de routage en multidiffusion est PIM DM ou PIM SM (« Protocol Indépendant Multicast » ou multidiffusion indépendante des protocoles de diffusion individuelle) en mode DM (mode dense) ou SM (mode à faible densité). Le protocole utilisé par un poste C pour faire partie d'un groupe est par exemple IGMP. Les messages sont diffusés par exemple en UDP/IP Multicast (UDP : « User Datagramm Protocol » ou protocole de datagrammes utilisateurs).

La sélection par le moyen S d'un groupe GA d'appartenance parmi les identifiants IG du groupe d'utilisateurs est effectuée par exemple de la manière suivante.

Au moyen G de création est associée une base BDD de données, dans laquelle sont enregistrés les identifiants IG1, ..., IGi, ..., IGn de groupes qui ont été créés sur celui-ci. Le moyen S de sélection du poste C d'utilisateur envoie, via le réseau R, le moyen B d'émission et le moyen F de transmission, un signal SBDD d'interrogation de la base de données BDD pour connaître quels sont les identifiants IG de groupes qui sont enregistrés dans celle-ci, appelés identifiants IG de groupes disponibles. La base BDD de données renvoie alors automatiquement au moyen S de sélection du poste C les identifiants IG1, ..., IGi, ..., IGn de groupes qu'elle possède par les moyens F, B et le réseau R . En réponse à la réception par le moyen S de sélection des identifiants IG1, ..., IGi, ..., IGn de groupes de la base BDD, ce moyen S de sélection provoque la présentation à l'utilisateur, sur le moyen P du poste C, de ces identifiants IG1, ..., IGi, ..., IGn de groupes disponibles. L'utilisateur choisit alors sur le moyen S de sélection, par une interface appropriée, le ou les identifiants IG de groupes auxquels il souhaite s'abonner parmi les identifiants de groupes disponibles IG1, ..., IGi, ..., IGn, ces interfaces étant par exemple une fenêtre d'affichage sur l'écran P du poste C. Le choix d'un ou de plusieurs identifiants IG de groupes parmi ceux disponibles est alors enregistré sur le moyen S de sélection, en tant que groupe GA d'appartenance du poste C.

Le moyen FM de filtrage est ensuite mis à jour automatiquement avec les groupes GA d'appartenance présents sur le moyen S de sélection de son poste C.

Les postes C d'utilisateurs sont par exemple des ordinateurs connectés par tout moyen approprié au réseau R et desservis en messages M par celui-ci. La présentation des messages M sur le poste C prend par exemple la forme d'un affichage sur son écran P et/ou de l'émission d'un son sur ce poste C. Le choix pour la mise à jour de groupes GA d'appartenance sur le poste C est par exemple proposé automatiquement à l'utilisateur à chaque fois qu'il met en marche son poste C, par exemple par une fenêtre correspondante, ou lors de la première mise en marche du dispositif de transmission. Il peut exister parmi les postes (C) d'utilisateurs une ou plusieurs bornes de présentation d'informations au public, qui ne sont pas rattachés à un utilisateur proprement dit, et qui comportent un écran de visualisation, de préférence de grande taille, sur le quel les messages sont affichés avec une durée d'affichage spécifiée dans celui-ci à sa création.

Les moyens A, G, F, B sont par exemple mis en oeuvre sur la même machine tel qu'un serveur de messagerie ou sur des serveurs distincts ou des modules distincts.

Des droits d'utilisation du moyen A d'administration à une ou plusieurs personnes lui sont par exemple affectés de la manière suivante.

Sur le moyen A d'administration sont enregistrés pour chaque administrateur autorisé, un identifiant IA d'administrateur et un mot de passe MP d'administrateur associé. Le moyen A d'administration comporte un moyen SA correspondant de saisie d'identifiants IA d'administrateur et de mots MP de passe. A chaque identifiant IG de groupe créé est associé sur le moyen A d'administration un ou plusieurs identifiants IA d'administrateur et mots de passe MP associés, de manière que la génération de messages M sur ce moyen A d'administration pour un groupe IG déterminé ne soit permise sur ce moyen A d'administration que lorsque l'identifiant IA d'administrateur saisi sur le moyen SA et le mot de passe MP d'administrateur saisi sur ce moyen SA correspondent à ceux associés dans le moyen A d'administration à cet identifiant IG de groupe, les identifiants IA d'administrateur et mots de passe MP associés étant enregistrés au préalable dans le moyen A pour chaque identifiant IG de groupe, par exemple dans une base de données correspondante. Il est ainsi effectué un contrôle d'accès des administrateurs aux groupes pour l'envoi à ceux-ci de messages.

La saisie des identifiants IA d'administrateur et mots de passe MP associé sur le moyen SA est effectuée par une interface appropriée, par exemple à l'aide de fenêtres d'affichage sur un écran d'ordinateur du moyen A, de même que la génération des messages M sur le moyen A.

Il peut être prévu un ou plusieurs administrateurs généraux ayant un identifiant IAG et un mot de passe MPG correspondant pour tous les identifiants IG de groupes et des administrateurs de certains groupes mais pas d'autres groupes.

Les identifiants IA d'administrateur, mots de passe MP d'administrateur et identifiants IG de groupes associés sont par exemple gérés dans le moyen G permettant à une autorité supérieure de les créer, modifier ou supprimer en association avec les identifiants IG.

De même, sur le poste C d'utilisateur, les moyens S de sélection comportent une interface permettant à l'utilisateur d'ajouter aux groupes GA d'appartenance ou de supprimer des groupes GA d'appartenance, les identifiants IG de groupes.

Il peut exister, en plus des identifiants IG de groupes pouvant être sélectionnés ou non par le moyen S de sélection, des identifiants IGO de groupes obligatoires, qui ne peuvent pas être ignorés par le moyen S et par le poste C et dont il a été décidé au préalable par une autorité supérieure que le poste C appartenait d'office à certains et pas à d'autres. Ces identifiants IGO de groupes obligatoires correspondent par exemple à la localisation physique ou à la position hiérarchique du poste C de l'utilisateur. Par exemple, ces identifiants IGO de groupes obligatoires sont : aile ouest du bâtiment, aile est du bâtiment, rez-de-chaussée du bâtiment, premier étage du bâtiment, deuxième étage du bâtiment pour une localisation physique, ou bureau d'étude, service après-vente, service achat, direction juridique, pour une situation hiérarchique. En outre, l'un des groupes obligatoires peut également être "tous", c'est-à-dire tous les postes C et C2, ainsi qu'on le verra ci-dessous. Ces identifiants IGO de groupes obligatoires sont présents d'office sur chaque poste C d'utilisateur en fonction de leur appartenance à ceux-ci et ne peuvent pas être supprimés sur le poste C d'utilisateur. Par conséquent, un message M adressé à un groupe de postes d'utilisateurs associé à un identifiant IGO de groupe obligatoire sera obligatoirement envoyé à ces postes C via les moyens A, F, B et le réseau R, et sera automatiquement présenté à l'utilisateur de ces postes C sans pouvoir être ignoré. Ces identifiants IGO de groupes obligatoires sont également appelés groupes administratifs et ne sont donc pas modifiables, sauf par un administrateur général. Ces groupes obligatoires ou administratifs proviennent par exemple d'un annuaire d'adresses ou d'un carnet d'adresses des postes C.

Dans ce qui précède, les messages M parvenant du moyen A aux postes C correspondant à l'identifiant du groupe IG=GA précisé dans ce message M sont des messages d'un premier type. Les messages M du premier type peuvent contenir une information IM sonore et/ou visuelle et/ou audiovisuelle. Cette information IM contenue dans les messages M du premier type peut également être une émission audiovisuelle en direct ou en différé, un film audiovisuel préenregistré, une téléconférence audiovisuelle comme par exemple une formation en ligne, une téléconférence audiovisuelle interactive, à laquelle le poste C doit participer, comme par exemple une réunion de travail par les sessions du type Netmeeting®. Cette information IM peut également être une information de questionnaire de sondage et/ou une information de questionnaire de vote ou de jeu, qui appellent une réponse de l'utilisateur sur le poste C, laquelle est alors renvoyée au moyen A, l'envoi de ce type d'information IM et la gestion des réponses étant alors assurée par un module I interactif et la base LOG. Cette information IM peut également être une information d'alerte et/ou une information relative à la maintenance du dispositif de transmission. Cette information de maintenance signale par exemple un dérangement qui sera occasionné sur le dispositif du fait de l'intervention de techniciens sur un système informatique ou autre de ce dispositif.

Le cas échéant, certains messages M sont prédéfinis sur le moyen A d'administration et y sont enregistrés, afin de ne pas avoir à les recréer à chaque fois. Ainsi, ces messages prédéfinis peuvent être envoyés plusieurs fois, une période de répétition d'envoi et/ou une période d'envoi en différé par le moyen A de ces messages pouvant être prévue. Les messages d'alerte sont par exemple prédéfinis. Le cas échéant, le moyen A d'administration peut définir pour un message M présenté sur un ou plusieurs postes C le renvoi automatique d'un signal d'acquittement de présentation par ce poste C.

Par ailleurs il peut être prévu que les messages M du premier type qui sont transmis pour présentation par le moyen FM de filtrage d'un poste C, c'est-à-dire dont l'identifiant IG de groupe associé correspond au groupe GA d'appartenance du moyen S de sélection de ce poste C, soient automatiquement ouverts ou exécutés par des applications installées sur les postes C, pour que l'information IM qu'ils contiennent soit automatiquement présentée sur le poste C à l'utilisateur. Ainsi, le dispositif de transmission suivant l'invention permet de télé agir sur les postes C, raccourcissant ainsi considérablement le temps de prise de connaissance des informations entre le moyen A d'administration et les postes C, ce qui est intéressant non seulement pour les utilisateurs de ces postes C mais également pour l'administrateur du moyen A. Ainsi, un utilisateur abonné par exemple à une conférence la recevra automatiquement à son début sur son poste C d'utilisateur s'il a pris le soin de s'y abonner au préalable en ayant sélectionné le groupe correspondant à cette conférence, sans nécessiter d'action ultérieure de l'utilisateur sur son poste C. Bien entendu, cela n'exclut pas que l'utilisateur peut à tout moment ignorer lui-même sur son poste C le message M après qu'il lui a été présenté et, dans le cas précédent de la conférence, activer une commande sur le poste C qui arrêtera sur celui-ci la présentation à l'utilisateur de la conférence et le remettra dans la situation initiale.

Dans le cas d'une information IM d'alerte, celle-ci sera pratiquement immédiatement affichée sur les postes C visés sans que leurs utilisateurs aient à accéder à leurs boîtes aux lettres de messagerie.

Par ailleurs, les messages peuvent être d'un deuxième type au lieu d'être du premier type indiqué ci-dessus.

Ces messages M2 du deuxième type sont produits par un moyen D de détection associé au moyen A d'administration et sont transmis par les moyens F, B et le réseau R aux postes C d'utilisateurs qui sont associés au réseau R en spécifiant dans le message M2 du deuxième type l'identifiant de groupe IG.

Sur les postes C associés au réseau R sont prévus des moyens DC de détection de messages M2 du deuxième type en aval du moyen FM de filtrage de messages. Lorsqu'un message M2 du deuxième type a passé le moyen FM de filtrage d'un poste C, du fait que l'identifiant IG de ce message M2 est égal à un groupe GA de ce poste C, ce message M2 est reçu sur le moyen DC de détection, qui renvoie alors automatiquement au moyen D de détection un signal S2 d'acquittement via le réseau R, le moyen B et le moyen F, et ce par exemple en mode de diffusion individuelle (« unicast »). Le signal S2 comporte par exemple l'identifiant de groupe IG du message M2 l'ayant déclenché sur le poste C. Le moyen D de détection comporte des moyens DE d'exploitation des messages S2 d'acquittement reçus, par exemple pour vérifier que tel ou tel poste C fonctionne correctement et/ou pour faire des statistiques sur les postes C fonctionnant correctement, compter le nombre de signaux S2 qu'il a reçus ou pour vérifier la présence des postes appartenant à un groupe. Un message S2 permet donc à la fois de vérifier l'état opérationnel du poste C l'ayant envoyé et de s'assurer que le réseau R fonctionne correctement, notamment lorsqu'il doit fonctionner en multidiffusion.

Les messages M2 du deuxième type ne comportent par exemple aucune information de manière à ne déclencher aucune présentation d'information sur les postes C d'utilisateurs les ayant reçus. Ainsi l'utilisateur d'un poste C recevant un message M2 du deuxième type ne s'en aperçoit pas et ces messages M2 du deuxième type peuvent être considérés comme des messages prédéfinis de service.

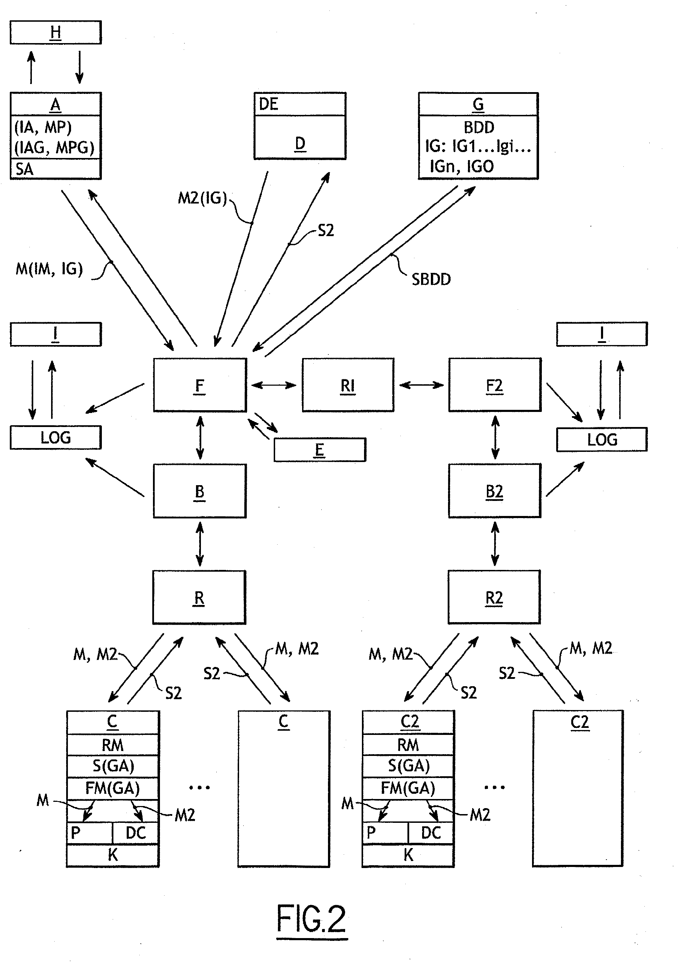

A la figure 2, dans un deuxième mode de réalisation du dispositif de transmission suivant l'invention, le moyen F de transmission et le moyen B d'émission sont maîtres et il est prévu un deuxième moyen F de transmission esclave relié d'une part par un réseau intermédiaire RI au moyen F de transmission maître et relié d'autre part à un moyen B2 d'émission esclave. Le moyen F de transmission maître envoie les messages, par exemple du premier type M et/ou du deuxième type M2, à la fois au moyen B d'émission maître pour desservir les postes C via le réseau R, et au moyen F de transmission esclave via le réseau RI. Le moyen F2 de transmission esclave transmet les messages M et/ou M2 qu'il a reçus du moyen F de transmission maître au moyen B2 d'émission esclave qui les envoie à son tour via un deuxième réseau R2 à des deuxièmes postes C2 d'utilisateurs desservis par ce deuxième réseau R2. Le moyen B2 d'émission esclave, le deuxième réseau R2 et les deuxièmes postes C2 d'utilisateurs sont analogues au moyen B d'émission maître, au réseau R et aux postes C d'utilisateurs, mais en étant associés au moyen F2 de transmission esclave.

Le réseau intermédiaire RI est par exemple un réseau à diffusion individuelle (en anglais "unicast"), tandis que le deuxième réseau R2 est par exemple à multidiffusion. Le réseau intermédiaire RI pourrait également être à multidiffusion.

Ce deuxième mode de réalisation permet de mettre en oeuvre le dispositif de transmission suivant l'invention en passant par des réseaux de types différents dans le cas où le réseau intermédiaire RI n'est pas du même type que le réseau R et n'est pas à multidiffusion. Par exemple, les éléments A, B, C, D, F, G, R sont associés à un premier site géographique d'une entreprise et les postes C sont ceux d'utilisateurs appartenant à cette entreprise, le réseau R est un réseau local de cette entreprise, tandis que les éléments F2, B2, R2 et C2 sont ceux d'un deuxième site géographique distant de cette entreprise, relié au premier site par un réseau RI étendu (en anglais : "Wide Area Network") qui emprunte par exemple le réseau Internet.

Ainsi, ce deuxième mode de réalisation permet de desservir en messages M et/ou M2 des postes C et C2 répartis sur des sites géographiques distants l'un de l'autre. Bien entendu, plus d'un moyen F2 de transmission esclave peut être prévu en série avec le moyen F2 représenté à la figure 2 et, en association avec certains de ces moyens F2 de transmission esclaves, un moyen B2 d'émission, un deuxième réseau R2 et des postes C2 associés. Un seul moyen F maître est prévu.

A cet effet, chaque moyen F, F2 de transmission comporte les paramètres modifiables suivants : un nom, l'indication d'un moyen de transmission maître ou esclave (maître pour F et esclave pour les moyens F2), l'indication du port de transmission où le moyen F de transmission maître est relié aux moyens F2 de transmission esclave, l'adresse IP du moyen de transmission F, F2, l'adresse où le moyen F de transmission maître reçoit des messages des moyens A et D et où le moyen F2 esclave est relié au moyen F maître, l'indication du port où le moyen F et le moyen F2 émettent des messages M, M2 (données) vers le moyen B, respectivement B2, l'indication du port où les moyens F et F2 reçoivent des réponses des postes C et C2 associés, l'adresse IP de multidiffusion vers laquelle les moyens F et F2 émettent les messages (plage IP). Le moyen B d'émission est par exemple un serveur de multidiffusion, de même que le moyen B2.

Les moyens F, F2 servent également à transmettre les informations entre serveurs comme les mises à jour et les transferts d'informations nécessaires au service. Les moyens F, F2 reçoivent également les messages de service venant des moyens B, B2.

Il peut être prévu un moyen E de gestion d'événements pour récupérer des signaux de service provenant du moyen B d'émission, tels que des signaux d'erreurs de diffusion, le journal des messages (heure d'envoi, contenu) ou autres ou des fichiers de traces, et visualiser des enregistrements dans la base LOG, pour un traitement ultérieur.

En outre, le moyen G de gestion permet de gérer les plages IP des postes C, C2 desservis par les moyens F, F2, en permettant d'ajouter, de supprimer ou de modifier celles-ci, une plage IP ne pouvant être associée qu'à un seul moyen F. Le moyen G permet également la gestion du service, des fichiers de configuration, des arrêts et lancements de serveurs. Le moyen G émet un signal régulièrement, par exemple toutes les 15 minutes vers les différents serveurs afin de maintenir l'état du service et de prévenir l'administrateur général par un message spécifique.

Lors de la définition initiale des identifiants IG de groupe sur le moyen G de création, il est possible par exemple de spécifier que tel ou tel groupe créé est dépendant d'un moyen F ou F2 déterminé, ce qui fera que seuls les postes C ou C2 desservis par ce moyen F ou F2 pourront sélectionner par leur moyen S ce groupe GA d'appartenance.

Le moyen G de gestion permet de gérer en outre les sons, fontes et tout autre paramètre de l'information IM présente dans les messages M du premier type, en permettant de créer et de supprimer des sons, fontes et valeurs de paramètres prédéfinis enregistrés.

Dans les messages M, l'identifiant IG du groupe est par exemple présent dans un en-tête du message qui peut comprendre en outre une référence de diffusion, identique pour chaque information IM contenue dans ce message. Ainsi, le poste C peut comporter des moyens pour contrôler la référence de diffusion contenue dans le message M transmis par le moyen FM de filtrage et ignorer une information IM présente dans un message M ainsi transmis mais qui aurait une référence de diffusion identique à celle d'un message M présenté précédemment sur ce poste C, de manière à ne pas lui présenter une nouvelle fois cette information IM identique et ne pas déranger inutilement l'utilisateur du poste C associé. Par exemple, pour être sûr qu'un message sera bien reçu par les postes C, chaque message est émis plusieurs fois successivement avec la même référence de diffusion, ce nombre de fois étant paramétrable. Dans le cas de la diffusion du réseau R en UDP Multicast, chaque message est par exemple diffusé 3 fois avec un intervalle de deux secondes entre chaque diffusion afin de pallier d'éventuelles pertes de paquets UDP sur le réseau R.

Chaque message comporte en outre un identifiant de message pour permettre de le retrouver en vue d'une exploitation future par le moyen E, cette référence de message étant par exemple une référence de message, différente pour chacun d'eux et par exemple incrémentée de un à chaque message.

De même, le moyen A d'administration peut définir d'autres critères pour chaque message M, comme par exemple la durée de présentation de celui-ci sur le poste C.

Par ailleurs, il peut également être prévu en association avec le moyen A d'administration un moyen H d'aide en ligne que les postes C, C2 peuvent interroger.

Des moyens de connexion des postes C, C2 avec l'extérieur des réseaux R, RI, R2 peuvent également être prévus, pour par exemple la connexion au réseau Internet.

Des moyens K de clés de sécurité peuvent être prévus sur les postes C et sur les moyens A, D, F et/ou B pour assurer que les messages M, M2 reçus par les postes C, C2 proviennent bien de ceux-ci et non d'une entité extérieure. Lorsqu'à la fois les moyens K et les moyens de connexion sont prévus, on peut interconnecter les domaines d'adresses IP de postes d'utilisateurs de manière sécurisée par le réseau Internet.

Le procédé de transmission de messages décrit ci-dessus peut être exécuté automatiquement sur les postes des utilisateurs et sur les moyens précédents par des programmes d'ordinateurs installés sur ceux-ci, les moyens A, D, G, I, LOG, F, B, E étant par exemple regroupés sur un même serveur.

## Revendications

1. Dispositif de transmission de messages par un premier réseau à une pluralité de postes (C) d'utilisateurs, **caractérisé en ce qu'**il comporte :
- au moins un moyen (G) de création d'identifiants (IG) de groupes de postes d'utilisateurs, et une base (BDD) de données dans laquelle sont enregistrés les identifiants (IG) de groupes créés par le moyen (G) de création,
- au moins un moyen (A) d'administration, apte à produire au moins un message (M) d'un premier type comprenant une information (IM) et au moins un identifiant (IG) de groupe associé au message (M) parmi les identifiants (IG) de groupes créés par le moyen (G) de création,
- au moins un moyen (F, B) d'émission pour faire parvenir par le premier réseau (R) ledit au moins un message (M) produit à des premiers postes (C) d'utilisateurs,
chaque premier poste (C) d'utilisateur comportant un moyen (RM) de réception automatique de messages (M) du réseau (R), un moyen (S) de sélection par l'utilisateur d'au moins un groupe (GA) d'appartenance parmi les identifiants (IG) de groupes d'utilisateurs créés par le moyen (G) de création, et un moyen (FM) de filtrage des messages (M) reçus par le moyen (RM) de réception pour :
- ne présenter à l'utilisateur que l'information (IM) des messages (M) du premier type parmi ceux qui sont présents sur le moyen (RM) de réception et dont l'identifiant (IG) de groupe est égal à un des groupes (GA) d'appartenance présents sur le moyen (S) de sélection, et
- ne pas présenter à l'utilisateur l'information (IM) des messages (M) du premier type, qui sont présents sur le moyen (RM) de réception et qui ont un identifiant (IG) de groupe associé différent des groupes (GA) d'appartenance présents sur le moyen (S) de sélection,
des liaisons étant prévues entre les postes (C) d'utilisateurs et la base (BDD) des données, pour que chaque moyen (S) de sélection soit apte à interroger la base (BDD) des données et obtenir les identifiants (IG) de groupe qui y sont enregistrés, en vue de sélectionner ledit au moins un groupe (GA) d'appartenance.

2. Dispositif de transmission suivant la revendication 1, **caractérisé en ce que** le premier réseau (R) est un réseau à multidiffusion pour l'envoi des messages (M) du moyen (F, B) d'émission aux postes (C) d'utilisateurs.

3. Dispositif de transmission suivant l'une quelconque des revendications précédentes, **caractérisé en ce que** ledit moyen (F, B) d'émission est maître et il est prévu au moins un deuxième moyen (F2, B2) d'émission esclave, apte à faire parvenir par un deuxième réseau (R2) des messages (M, M2) reçus à des deuxièmes postes (C2) d'utilisateurs desservis par ce deuxième réseau (R2), chaque deuxième poste (C2) d'utilisateur comportant un moyen (RM) de réception de messages (M) du deuxième réseau (R2), un moyen (S) de sélection d'au moins un groupe (GA) d'appartenance parmi les identifiants (IG) de groupes d'utilisateurs créés par le moyen (G) de création, et un moyen (FM) de filtrage des messages (M) reçus par le moyen (RM) de réception pour :
- ne présenter à l'utilisateur que l'information (IM) des messages (M) du premier type parmi ceux qui sont présents sur le moyen (RM) de réception et dont l'identifiant (IG) de groupe est égal à un des groupes (GA) d'appartenance présents sur le moyen (S) de sélection, et
- ne pas présenter à l'utilisateur l'information (IM) des messages (M) du premier type, qui sont présents sur le moyen (RM) de réception et qui ont un identifiant (IG) de groupe associé différent des groupes (GA) d'appartenance présents sur le moyen (S) de sélection,
et, en outre, un réseau (RI) intermédiaire reliant le moyen d'émission maître (F, B) au deuxième moyen d'émission esclave (F2, B2) pour lui faire parvenir les messages (M, M2).

4. Dispositif de transmission selon la revendication 3, **caractérisé en ce que** les premier et deuxième réseaux (R, R2) sont chacun des réseaux à multidiffusion pour l'envoi respectivement des messages (M, M2) des moyens (B, B2) d'émission maître et esclave aux premiers et deuxièmes postes (C, C2) d'utilisateurs associés.

5. Dispositif de transmission selon la revendication 3 ou 4, **caractérisé en ce que** le réseau intermédiaire (RI) est un réseau à diffusion individuelle.

6. Dispositif de transmission selon l'une quelconque des revendications précédentes, **caractérisé en ce qu'**il est prévu un moyen (D) de détection, apte à produire au moins un message (M2) prédéfini du deuxième type, comportant au moins un identifiant (IG) de groupe parmi ceux créés par le moyen (G) de création, pour transmission par le moyen (F, B) d'émission aux postes (C) d'utilisateurs, des moyens (DC) de détection du message (M2) du deuxième type étant prévus sur au moins un poste (C) d'utilisateur en aval de son moyen de filtrage (FM), de telle sorte que le moyen (FM) de filtrage ne transmette auxdits moyens (DC) de détection du poste (C) que les messages (M2) du deuxième type, dont l'identifiant (IG) de groupe est égal à un des groupes (GA) d'appartenance présents sur le moyen (S) de sélection associé, la bonne réception par ces moyens (DC) de détection du poste (C) du message (M2) du deuxième type transmis par ledit moyen de filtrage (FM) déclenchant le renvoi automatique d'un signal (S2) d'acquittement via le réseau (R) et le moyen (F, B) d'émission au moyen (D) de détection, lequel comporte des moyens (DE) d'exploitation des signaux (S2) d'acquittement reçus.

7. Dispositif de transmission suivant l'une quelconque des revendications précédentes, **caractérisé en ce que** les messages (M) du premier type et les moyens (RM) de réception des postes (C) d'utilisateurs sont tels que les messages (M) reçus par ceux-ci et transmis par le moyen (F) de filtrage y sont automatiquement ouverts pour présentation à l'utilisateur de l'information (IM) qu'ils contiennent.

8. Dispositif de transmission selon l'une quelconque des revendications précédentes, **caractérisé en ce que** les moyens (S) de sélection comportent une interface permettant à l'utilisateur du poste (C) associé d'ajouter aux groupes (GA) d'appartenance ou de supprimer des groupes (GA) d'appartenance, les identifiants (IG) de groupes.

9. Procédé de transmission de messages par un premier réseau à une pluralité de postes (C) d'utilisateurs, **caractérisé par** les étapes suivantes :
- création d'identifiants (IG) de groupes de postes d'utilisateurs, et enregistrement des identifiants (IG) de groupes créés dans une base (BDD) de données,
- production d'au moins un message (M) d'un premier type comprenant une information (IM) et au moins un identifiant (IG) de groupe associé au message (M) parmi les d'identifiants (IG) de groupes créés,
- envoi, par le premier réseau (R), dudit au moins un message (M) produit à des premiers postes (C) d'utilisateurs,
- réception automatique de messages (M) du réseau (R) sur chaque premier poste (C) d'utilisateur, sélection par l'utilisateur, sur chaque premier poste (C) d'utilisateur, d'au moins un groupe (GA) d'appartenance parmi les identifiants (IG) de groupes d'utilisateurs créés, et filtrage automatique, sur chaque premier poste (C) d'utilisateur, des messages (M) reçus pour :
- ne présenter sur ledit poste (C) à l'utilisateur que l'information (IM) des messages (M) du premier type parmi ceux reçus, dont l'identifiant (IG) de groupe est égal à un des groupes (GA) d'appartenance sélectionnés, et
- ne pas présenter sur ledit poste (C) à l'utilisateur l'information (IM) des messages (M) du premier type reçus, qui ont un identifiant (IG) de groupe associé différent des groupes (GA) d'appartenance sélectionnés, des liaisons étant prévues entre les postes (C) d'utilisateurs et la base (BDD) des données, la sélection par l'utilisateur, sur chaque premier poste (C) d'utilisateur, d'au moins un groupe (GA) d'appartenance parmi les identifiants (IG) de groupes d'utilisateurs créés comprenant les étapes suivantes :
interrogation de la base (BDD) de données, obtention des identifiants (IG) de groupe qui y sont enregistrés, et sélection dudit au moins un groupe (GA) d'appartenance parmi les identifiants (IG) de groupe obtenus.

10. Programme d'ordinateur, comportant des instructions pour la mise en oeuvre du procédé de transmission de messages selon la revendication 9

11. Poste (C) d'utilisateur comportant un moyen (RM) de réception automatique de messages (M) du réseau (R), un moyen (S) de sélection par l'utilisateur d'au moins un groupe (GA) d'appartenance parmi les identifiants (IG) de groupes d'utilisateurs créés par un moyen (G) de création, et un moyen (FM) de filtrage des messages (M) reçus par le moyen (RM) de réception pour :
- ne présenter à l'utilisateur que l'information (IM) des messages (M) du premier type parmi ceux qui sont présents sur le moyen (RM) de réception et dont l'identifiant (IG) de groupe est égal à un des groupes (GA) d'appartenance présents sur le moyen (S) de sélection, et
- ne pas présenter à l'utilisateur l'information (IM) des messages (M) du premier type, qui sont présents sur le moyen (RM) de réception et qui ont un identifiant (IG) de groupe associé différent des groupes (GA) d'appartenance présents sur le moyen (S) de sélection,
le moyen de sélection étant apte à interroger une base (BDD) des données pour obtenir les identifiants (IG) de groupe qui y sont enregistrés, en vue de sélectionner ledit au moins un groupe (GA) d'appartenance.

## Patentansprüche

1. Vorrichtung zur Übertragung von Nachrichten an eine Vielzahl von Benutzerstationen (C) durch ein erstes Netzwerk, **dadurch gekennzeichnet, dass** sie aufweist:
- mindestens eine Einrichtung (G) zur Erzeugung von Kennungen (IG) von Gruppen von Benutzerstationen und eine Datenbank (BDD), in der die von der Erzeugungseinrichtung (G) erzeugten Gruppenkennungen (IG) gespeichert sind,
- mindestens eine Verwaltungseinrichtung (A), die mindestens eine Nachricht (M) eines ersten Typs produzieren kann, die eine Information (IM) und mindestens eine der Nachricht (M) zugeordnete Gruppenkennung (IG) unter den von der Erzeugungseinrichtung (G) erzeugten Gruppenkennungen (IG) enthält,
- mindestens eine Sendeeinrichtung (F, B), um die mindestens eine produzierte Nachricht (M) über das erste Netzwerk (R an erste Benutzerstationen (C) zu übermitteln,
wobei jede erste Benutzerstation (C) eine automatische Empfangseinrichtung (RM) von Nachrichten (M) vom Netzwerk (R), eine Einrichtung (S) zur Auswahl mindestens einer Zugehörigkeitsgruppe (GA) unter den von der Erzeugungseinrichtung (G) erzeugten Kennungen (IG) von Benutzergruppen durch den Benutzer und eine Einrichtung (FM) zum Filtern der von der Empfangseinrichtung (RM) empfangenen Nachrichten (M) aufweist, um:
- dem Benutzer nur die Information (IM) der Nachrichten (M) des ersten Typs unter denjenigen zu präsentieren, die in der Empfangseinrichtung (RM) vorhanden sind und deren Gruppenkennung (IG) gleich einer der in der Auswahleinrichtung (S) vorhandenen Zugehörigkeitsgruppen (GA) ist, und
- dem Benutzer nicht die Information (IM) der Nachrichten (M) des ersten Typs zu präsentieren, die in der Empfangseinrichtung (RM) vorhanden sind und die eine zugeordnete Gruppenkennung (IG) haben, die sich von den in der Auswahleinrichtung (S) vorhandenen Zugehörigkeitsgruppen (GA) unterscheidet,
wobei Verbindungen zwischen den Benutzerstationen (C) und der Datenbank (BDD) vorgesehen sind, damit jede Auswahleinrichtung (S) in der Lage ist, die Datenbank (BDD) abzufragen und die Gruppenkennungen (IG) zu erhalten, die dort gespeichert sind, um die mindestens eine Zugehörigkeitsgruppe (GA) auszuwählen.

2. Übertragungsvorrichtung nach Anspruch 1, **dadurch gekennzeichnet, dass** das erste Netzwerk (R) ein Multicast-Netzwerk zum Senden der Nachrichten (M) von der Sendeeinrichtung (F, B) zu den Benutzerstationen (C) ist.

3. Übertragungsvorrichtung nach einem der vorhergehenden Ansprüche, **dadurch gekennzeichnet, dass** die Sendeeinrichtung (F, B) Master ist, und dass mindestens eine zweite Slave-Sendeeinrichtung (F2, B2) vorgesehen ist, die in der Lage ist, durch ein zweites Netzwerk (R2) empfangene Nachrichten (M, M2) an zweite Benutzerstationen (C2) zu übermitteln, die von diesem zweiten Netzwerk (R2) bedient werden, wobei jede zweite Benutzerstation (C2) eine Empfangseinrichtung (RM) von Nachrichten (M) vom zweiten Netzwerk (R2), eine Auswahleinrichtung (S) mindestens einer Zugehörigkeitsgruppe (GA) unter den von der Erzeugungseinrichtung (G) erzeugten Kennungen (IG) von Benutzergruppen und eine Einrichtung (FM) zum Filtern der von der Empfangseinrichtung (RM) empfangenen Nachrichten (M), um:
- dem Benutzer nur die Information (IM) der Nachrichten (M) des ersten Typs unter denjenigen zu präsentieren, die in der Empfangseinrichtung (RM) vorhanden sind und deren Gruppenkennung (IG) gleich einer der in der Auswahleinrichtung (S) vorhandenen Zugehörigkeitsgruppen (GA) ist, und
- dem Benutzer nicht die Information (IM) der Nachrichten (M) des ersten Typs zu präsentieren, die in der Empfangseinrichtung (RM) vorhanden sind und die eine zugeordnete Gruppenkennung (IG) haben, die sich von den in der Auswahleinrichtung (S) vorhandenen Zugehörigkeitsgruppen (GA) unterscheidet,
und außerdem ein Zwischennetzwerk (RI) aufweist, das die Master-Sendeeinrichtung (F, B) mit der zweiten Slave-Sendeeinrichtung (F2, B2) verbindet, um ihr die Nachrichten (M, M2) zu übermitteln.

4. Übertragungsvorrichtung nach Anspruch 3, **dadurch gekennzeichnet, dass** die ersten und zweiten Netzwerke (R, R2) je Multicast-Netzwerke zum Senden der Nachrichten (M, M2) der Master- bzw. Slave-Sendeeinrichtungen (B, B2) an die zugeordneten ersten und zweiten Benutzerstationen (C, C2) sind.

5. Übertragungsvorrichtung nach Anspruch 3 oder 4, **dadurch gekennzeichnet, dass** das Zwischennetzwerk (RI) ein Unicast-Netzwerk ist.

6. Übertragungsvorrichtung nach einem der vorhergehenden Ansprüche, **dadurch gekennzeichnet, dass** eine Erfassungseinrichtung (D) vorgesehen ist, die mindestens eine vordefinierte Nachricht (M2) des zweiten Typs produzieren kann, die mindestens eine Gruppenkennung (IG) unter denjenigen aufweist, die von der Erzeugungseinrichtung (G) erzeugt werden, zur Übertragung durch die Sendeeinrichtung (F, B) an die Benutzerstationen (C), wobei Einrichtungen (DC) zur Erfassung der Nachricht (M2) des zweiten Typs in mindestens einer Benutzerstation (C) stromabwärts hinter ihrer Filtereinrichtung (FM) vorgesehen sind, damit die Filtereinrichtung (FM) an die Erfassungseinrichtungen (DC) der Station (C) nur die Nachrichten (M2) des zweiten Typs überträgt, deren Gruppenkennung (IG) gleich einer der in der zugeordneten Auswahleinrichtung (S) vorhandenen Zugehörigkeitsgruppen (GA) ist, wobei der korrekte Empfang der von der Filtereinrichtung (FM) übertragenen Nachricht (M2) des zweiten Typs durch diese Erfassungseinrichtungen (DC) der Station (C) das automatische Rücksenden eines Bestätigungssignals (S2) über das Netzwerk (R) und die Sendeeinrichtung (F, B) an die Erfassungseinrichtung (D) auslöst, die Einrichtungen zur Auswertung der empfangenen Bestätigungssignale (S2) aufweist.

7. Übertragungsvorrichtung nach einem der vorhergehenden Ansprüche, **dadurch gekennzeichnet, dass** die Nachrichten (M) des ersten Typs und die Empfangseinrichtungen (RM) der Benutzerstationen (C) so sind, dass die von diesen empfangenen und durch die Filtereinrichtung (F) übertragenen Nachrichten (M) dort automatisch geöffnet werden, um dem Benutzer die Information (IM) zu präsentieren, die sie enthalten.

8. Übertragungsvorrichtung nach einem der vorhergehenden Ansprüche, **dadurch gekennzeichnet, dass** die Auswahleinrichtungen (S) eine Schnittstelle aufweisen, die es dem Benutzer der zugeordneten Station (C) erlaubt, die Gruppenkennungen (IG) den Zugehörigkeitsgruppen (GA) hinzuzufügen oder sie aus den Zugehörigkeitsgruppen (GA) zu entfernen.

9. Verfahren zur Übertragung von Nachrichten durch ein erstes Netzwerk an eine Vielzahl von Benutzerstationen (C), **gekennzeichnet durch** die folgenden Schritte:
- Erzeugen von Kennungen (IG) von Gruppen von Benutzerstationen und Speichern der erzeugten Gruppenkennungen (IG) in einer Datenbank (BDD),
- Produzieren mindestens einer Nachricht (M) eines ersten Typs, die eine Information (IM) und mindestens eine der Nachricht (M) zugeordnete Gruppenkennung (IG) unter den erzeugten Gruppenkennungen (IG) enthält,
- Senden, durch das erste Netzwerk (R), der mindestens einen produzierten Nachricht (M) an erste Benutzerstationen (C),
- automatisches Empfangen von Nachrichten (M) vom Netzwerk (R) in jeder ersten Benutzerstation (C), Auswählen in jeder ersten Benutzerstation (C) mindestens einer Zugehörigkeitsgruppe (GA) unter den erzeugten Kennungen (IG) von Benutzergruppen durch den Benutzer, und automatisches Filtern der empfangenen Nachrichten (M) in jeder ersten Benutzerstation (C), um:
- in der ersten Station (C) dem Benutzer nur die Information (IM) der Nachrichten (M) des ersten Typs unter den empfangenen zu präsentieren, deren Gruppenkennung (IG) gleich einer der ausgewählten Zugehörigkeitsgruppen (GA) ist, und
- in der Station (C) dem Benutzer nicht die Information (IM) der empfangene Nachrichten (M) des ersten Typs zu präsentieren, die eine zugeordnete Gruppenkennung (IG) hat, die sich von den ausgewählten Zugehörigkeitsgruppen (GA) unterscheidet, wobei Verbindungen zwischen den Benutzerstationen (C) und der Datenbank (BDD) vorgesehen sind, wobei die Auswahl mindestens einer Zugehörigkeitsgruppe (GA) unter den erzeugten Kennungen (IG) von Benutzergruppen in jeder ersten Benutzerstation (C) durch den Benutzer die folgenden Schritte enthält:
Abfrage der Datenbank (BDD), Erhalt der dort gespeicherten Gruppenkennungen (IG) und Auswahl der mindestens einen Zugehörigkeitsgruppe (GA) unter den erhaltenen Gruppenkennungen (IG).

10. Computerprogramm, das Anweisungen zur Durchführung des Übertragungsverfahrens von Nachrichten nach Anspruch 9 aufweist.

11. Benutzerstation (C), die eine automatische Empfangseinrichtung (RM) von Nachrichten (M) vom Netzwerk (R), eine Einrichtung (S) zur Auswahl mindestens einer Zugehörigkeitsgruppe (GA) unter den Kennungen (IG) von Benutzergruppen, die von einer Erzeugungseinrichtung (G) erzeugt werden, durch den Benutzer und eine Einrichtung (FM) zur Filterung der empfangenen Nachrichten (M) durch die Empfangseinrichtung (RM) aufweist, um:
- dem Benutzer nur die Information (IM) der Nachrichten (M) des ersten Typs unter denjenigen zu präsentieren, die in der Empfangseinrichtung (RM) vorhanden sind und deren Gruppenkennung (IG) gleich einer der in der Auswahleinrichtung (S) vorhandenen Zugehörigkeitsgruppen (GA) ist, und
- dem Benutzer nicht die Information (IM) der Nachrichten (M) des ersten Typs zu präsentieren, die in der Empfangseinrichtung (RM) vorhanden sind und die eine zugeordnete Gruppenkennung (IG) haben, die sich von den in der Auswahleinrichtung (S) vorhandenen Zugehörigkeitsgruppen (GA) unterscheidet,
wobei die Auswahleinrichtung eine Datenbank (BDD) abfragen kann, um die dort gespeicherten Gruppenkennungen (IG) zu erhalten, um die mindestens eine Zugehörigkeitsgruppe (GA) auszuwählen.

## Claims

1. Device for transmitting messages by a first network to a plurality of user sets (C), **characterized in that** it comprises:
- at least one means (G) for creating user set group identifiers (IG), and a database (BDD) in which the group identifiers (IG) created by the creation means (G) are recorded,
- at least one administration means (A), able to produce at least one message (M) of a first type comprising an information (IM) and at least one group identifier (IG) associated with the message (M) among the group identifiers (IG) created by the creation means (G),
- at least one sending means (F, B) for forwarding by the first network (R) said at least one message (M) produced to first user sets (C),
each first user set (C) comprising a means (RM) of automatic reception of messages (M) of the network (R), a means (S) of selection by the user of at least one membership group (GA) among the user group identifiers (IG) created by the creation means (G), and a means (FM) for filtering the messages (M) received by the reception means (RM) so as to:
- present to the user only the information (IM) of the messages (M) of the first type among those which are present on the reception means (RM) and whose group identifier (IG) is equal to one of the membership groups (GA) present on the selection means (S), and
- not present to the user the information (IM) of the messages (M) of the first type, which are present on the reception means (RM) and which have a different associated group identifier (IG) from the membership groups (GA) present on the selection means (S),
links being provided between the user sets (C) and the database (BDD), so that each selection means (S) is able to interrogate the database (BDD) and obtain the group identifiers (IG) which are recorded therein, with a view to selecting said at least one membership group (GA) .

2. Transmission device in accordance with Claim 1, **characterized in that** the first network (R) is a multicast network for dispatching the messages (M) of the sending means (F, B) to the user sets (C).

3. Transmission device in accordance with any one of the preceding claims, **characterized in that** said sending means (F, B) is master and there is provided at least one second slave sending means (F2, B2), able to forward by a second network (R2) messages (M, M2) received at second user sets (C2) serviced by this second network (R2), each second user set (C2) comprising a means (RM) for receiving messages (M) of the second network (R2), a means (S) for selecting at least one membership group (GA) among the user group identifiers (IG) created by the creation means (G), and a means (FM) for filtering the messages (M) received by the reception means (RM) so as to:
- present to the user only the information (IM) of the messages (M) of the first type among those which are present on the reception means (RM) and whose group identifier (IG) is equal to one of the membership groups (GA) present on the selection means (S), and
- not present to the user the information (IM) of the messages (M) of the first type, which are present on the reception means (RM) and which have a different associated group identifier (IG) from the membership groups (GA) present on the selection means (S),
and, furthermore, an intermediate network (RI) linking the master sending means (F, B) to the second slave sending means (F2, B2) so as to forward the messages (M, M2) to it.

4. Transmission device according to Claim 3, **characterized in that** the first and second networks (R, R2) are each multicast networks for dispatching respectively the messages (M, M2) of the master and slave sending means (B, B2) to the associated first and second user sets (C, C2).

5. Transmission device according to Claim 3 or 4, **characterized in that** the intermediate network (RI) is an individual-broadcast network.

6. Transmission device according to any one of the preceding claims, **characterized in that** there is provided a detection means (D), able to produce at least one predefined message (M2) of the second type, comprising at least one group identifier (IG) among those created by the creation means (G), for transmission by the sending means (F, B) to the user sets (C), means (DC) for detecting the message (M2) of the second type being provided on at least one user set (C) downstream of its filtering means (FM), in such a way that the filtering means (FM) transmits to said detection means (DC) of the set (C) only the messages (M2) of the second type, whose group identifier (IG) is equal to one of the membership groups (GA) present on the associated selection means (S), the correct reception by these detection means (DC) of the set (C) of the message (M2) of the second type transmitted by said filtering means (FM) triggering the automatic return of an acknowledgement signal (S2) via the network (R) and the means (F, B) of sending to the detection means (D), which comprises means (DE) for utilizing the acknowledgement signals (S2) received.

7. Transmission device in accordance with any one of the preceding claims, **characterized in that** the messages (M) of the first type and the reception means (RM) of the user sets (C) are such that the messages (M) received by the latter and transmitted by the filtering means (F) are automatically opened thereat for presentation to the user of the information (IM) that they contain.

8. Transmission device according to any one of the preceding claims, **characterized in that** the selection means (S) comprise an interface allowing the user of the associated set (C) to add to the membership groups (GA) or to delete from the membership groups (GA), the group identifiers (IG).

9. Method for transmitting messages by a first network to a plurality of user sets (C), **characterized by** the following steps:
- creation of user set group identifiers (IG), and recording of the group identifiers (IG) created in a database (BDD),
- production of at least one message (M) of a first type comprising an information (IM) and at least one group identifier (IG) associated with the message (M) among the group identifiers (IG) created,
- dispatch, by the first network (R), of said at least one message (M) produced to first user sets (C),
- automatic reception of messages (M) of the network (R) on each first user set (C), selection by the user, on each first user set (C), of at least one membership group (GA) among the user group identifiers (IG) created, and automatic filtering, on each first user set (C), of the messages (M) received so as to:
- present on said set (C) to the user only the information (IM) of the messages (M) of the first type among those received, whose group identifier (IG) is equal to one of the membership groups (GA) selected, and
- not present on said set (C) to the user the information (IM) of the received messages (M) of the first type, which have a different associated group identifier (IG) from the membership groups (GA) selected,
links being provided between the user sets (C) and the database (BDD), the selection by the user, on each first user set (C), of at least one membership group (GA) among the user group identifiers (IG) created comprising the following steps:
interrogation of the database (BDD), obtaining of the group identifiers (IG) which are recorded therein, and selection of said at least one membership group (GA) among the group identifiers (IG) obtained.

10. Computer program, comprising instructions for the implementation of the method for transmitting messages according to Claim 9.

11. User set (C) comprising a means (RM) of automatic reception of messages (M) of the network (R), a means (S) of selection by the user of at least one membership group (GA) among the user group identifiers (IG) created by a creation means (G), and a means (FM) for filtering the messages (M) received by the reception means (RM) so as to:
- present to the user only the information (IM) of the messages (M) of the first type among those which are present on the reception means (RM) and whose group identifier (IG) is equal to one of the membership groups (GA) present on the selection means (S), and
- not present to the user the information (IM) of the messages (M) of the first type, which are present on the reception means (RM) and which have a different associated group identifier (IG) from the membership groups (GA) present on the selection means (S),
the selection means being able to interrogate a database (BDD) to obtain the group identifiers (IG) which are recorded therein, with a view to selecting said at least one membership group (GA).
